# EUROPEAN PATENT SPECIFICATION

(11) **EP 1 894 959 B1**
(45) Date of publication and mention of the grant of the patent: **17.08.2011**
(21) Application number: 07004950.7
(22) Date of filing: 09.03.2007
(51) Int. Cl.: C08G 67/02

(54) **Process for producing polyketone**
Herstellungsverfahren für Polyketon
Procédé de production de polycétone

(30) Priority: 31.08.2006 KR 20060083273
(43) Date of publication of application: 05.03.2008
(73) Proprietor: Hyosung Corporation, Dongan-ku Anyang-si Kyonggi do 431-080 (KR)
(72) Inventor: Shim, Jae-Yoon, Anyang-si Kyonggi-do 431-080 (KR); Cho, Hae-Souk, Anyang-si Kyonggi-do 431-080 (KR); Choi, Jong-In, Anyang-si Kyonggi-do 431-080 (KR); Yoon, Sung-Kyun, Anyang-si Kyonggi-do 431-080 (KR); Jang, Jean-Young, Anyang-si Kyonggi-do 431-080 (KR); Kim, Heon-Su, Anyang-si Kyonggi-do 431-080 (KR)
(74) Representative: Katzameyer, Michael

(56) References cited:
- WO-A-00/29462
- DE-A1- 10 303 312

## Description

### Technical Field

The present invention relates to a process for preparing polyketone with improved catalytic activity and intrinsic viscosity, and specifically a process for preparing polyketone, comprises copolymerization of carbon monoxide and an ethylenically unsaturated compound in a liquid medium in the presence of a catalyst, wherein the catalyst is an organometallic complex comprising (a) a Group 9, Group 10 or Group 11 transition metal complex, (b) a ligand containing a Group 15 element, and (c) an anion of an acid with pKa of 4 or lower, and the (b) component is 1,3-bis[bis(2-methoxy-5-methylphenyl)phosphino]propane.

A copolymer of carbon monoxide and an ethylenically unsaturated compound, particularly polyketone in which a repeating unit derived from carbon monoxide and a repeating unit derived from an ethylenically unsaturated compound are alternately linked to each other, has excellent mechanical thermal properties, as well as high abrasion resistance, chemical resistance, and gas barrierability such that it is useful in a variety of applications. Moreover, the polymer of the alternately copolymerized polyketone has higher mechanical and thermal properties, and is useful as an economically available engineering plastic material. In particular, it is useful as a part such as a gear in vehicles due to its high abrasion resistance; useful as a lining material for a chemical transferring pipe due to its high chemical resistance; and useful as a light gasoline tank such as a lining material due to it high gas barrierability. Further, if ultra-high molecular weight polyketone having an intrinsic viscosity of 2 or more is used for fibers, a high stretch ratio can be obtained, and a fiber with high strength and high elasticity, aligned in the elongation direction, can be prepared. Thus prepared fiber can be desirably used as a material for a building material such as a reinforcement material for a belt or a rubber hose, a tire cord, and a concrete reinforcement material, or in the industrial material.

### Background Art

As a process for obtaining high molecular weight polyketone which exhibits with high mechanical thermal properties, a process comprising performing polymerization using a catalyst comprising palladium, 1,3-bis[di(2-methoxyphenyl)phosphino]propane, and anion at a lower temperature is disclosed in EP Patent No. 319038. Another method using a catalyst comprising palladium, 2-(2,4,6-trimethylbenzene)-1,3-bis[di(2-methoxyphenyl)phosphino]propane, and anion is disclosed in JP-A No.H4-227726. Another process using a catalyst comprising palladium, 2-hydroxy-1,3-bis[di(2-methoxyphenyl)phosphino]propane, and anion is disclosed in JP-A No. H5-140301. However, by any of these processes, the amount of the polyketone obtained per a catalyst is low, the method for synthesis of a phosphor ligand is difficult, and those processes need high costs, thereby it being economically problematic.

As a process using an inexpensive catalyst to obtain a high molecular weight polyketone, a process comprising performing polymerization in a solvent of tert-butanol using a catalyst comprising palladium, 1,3-bis(diphenylphosphino)propane, and an anion of boron-based fluorides is disclosed in JP-A No. H6-510552. According to this process, high molecular weight polyketone is obtained, but the amount of the polyketone obtained per a catalyst is very low, and as a result, the cost of polyketone is increased, thereby it being problematic.

As a process for obtaining high molecular weight polyketone economically, a process comprising performing polymerization in a mixed solvent of methanol and 1 to 50 vol% of water is disclosed in JP-A No. H8-283403. In this process, a catalyst comprising a Group 10 element such as palladium, and 1,3-bis(diphenylphosphino)propane, and an anion of an inorganic acid is used. In particular, in the case of using palladium acetate, 1,3-bis(diphenylphosphino)propane, and phosphotungstic acid in a solvent of methanol with 17 vol% of water, polymerization at 85°C at 4.8 MPa of an equimolar mixed gas of ethylene and carbon monoxide for 30 min provides a polymer with an intrinsic viscosity of 1.36. At that time, the catalytic activity is 5.7 kg/g-Pd·hr. If for the mixed solvent, sulfuric acid is used instead of phosphotungstic acid, the catalytic activity is 9.5 kg/g-Pd·hr. According to this process, due to high catalytic activity, high molecular weight polyketone is obtained to some what, but even with longer polymerization time, it would be impossible to obtain a polymer with an intrinsic viscosity of 2 or more, which is required so as to be used as a high performance material.

EP Patent No. 0361584 discloses a process comprising performing polymerization at a lower pressure using palladium, 1,3-bis(diphenylphosphino)propane, and trifluoroacetic acid. According to this process, a polymer with a catalytic activity of 1.3 kg/g-Pd·hr, and an intrinsic viscosity of 1.8 can be obtained by polymerization at an input ratio of 1:2 of ethylene and carbon dioxide at 50°C and at 4 MPa for 5.2 hours. By this process, polyketone can be obtained at relatively low temperatures and low pressures, but it is be impossible to obtain a polymer with a high intrinsic viscosity, which is required so as to be used as a high performance material.

JP-A No. 2002-317044 discloses the use of sulfuric acid as an inorganic acid in a catalyst system as in the prior art. In this case of using a Group 10 element such as palladium, and 1,3-bis(diphenylphosphino)propane in a solvent of methanol, polymerization at 80°C at 5.5 MPa of an equimolar mixed gas of ethylene and carbon monoxide for 30 min provides a polymer with an intrinsic viscosity of 6.45. At that time, the catalytic activity is 6.0 kg/g-Pd·hr.

DE 103 03 312 relates to a process for the preparation of different polymers, including polyketones, wherein a metal complex catalyst is used. This reference discloses a general formula for the metal complex catalyst which also includes the ligand 1,3-bis[bis(2-methoxy-5-methylphenyl)-phosphino]propane.

WO 00/29462 discloses a process for the preparation of copolymers of carbon monoxide in the presence of a catalyst composition comprising a complex of a group VIII metal with a bidentate ligand such as 1,3-bis[bis(2-methoxy-5-methylphenyl)phosphino]propane.

Neither DE 103 03 312 nor WO 00/29462 teaches a process where upon polymerization benzothiazole or benzophenone is added.

As such, in a process for preparing polyketone using carbon monoxide and an ethylenically unsaturated compound as raw materials, there is a desire of development of a technique for preparing polyketone having high catalytic activity as well as high intrinsic viscosity suitable for the use as a tire cord.

In order to solve the above-mentioned problems, it is an object of the present invention to provide a process for preparing polyketone, in which an organometallic complex comprising palladium acetate, 1,3-bis[bis(2-methoxy-5-methylphenyl)phosphino]propane, and an anion of an acid with pKa of 4 or lower are used as the catalyst components, and upon polymerization, benzothiazole or benzophenone is added to improve the catalytic activity, the intrinsic viscosity, and the yield, even during a short polymerization time.

### Disclosure of the Invention

According to the present invention, in the process for preparing polyketone comprising copolymerization of carbon monoxide and an ethylenically unsaturated compound in a liquid medium in the presence of a catalyst, the catalyst is an organometallic complex comprising (a) a Group 9, Group 10 or Group 11 transition metal complex, (b) a ligand containing a Group 15 element, and (c) an anion of an acid with pKa of 4 or lower, and the (b) component is 1,3-bis[bis(2-methoxy-5-methylphenyl)phosphino]propane.

According to the present invention, as the liquid medium, a mixed solvent of methanol and 1000 to 10000 ppm of water is used.

According to the present invention, upon polymerization, benzothiazole or benzophenone is selectively added.

According to a preferred embodiment of the present invention, the (a) component, which is a transition metal component of the catalyst, is palladium acetate, and the (c) component, which is an acid component of the catalyst, trifluoroacetic acid or sulfuric acid, can be used singly or in a mixture thereof.

According to the present invention, the molar ratio of the (a) component : the (b) component : the (c) component of the catalyst is 1 : 1.2 : 7.

Hereinbelow, the present invention will be described in detail.

The process for preparing polyketone according to the present invention comprises copolymerization of carbon monoxide and an ethylenically unsaturated compound in a liquid medium in the presence of a catalyst, wherein the catalyst is an organometallic complex comprising (a) a Group 9, Group 10 or Group 11 transition metal complex, (b) a ligand containing a Group 15 element, and (c) an anion of an acid with pKa of 4 or lower, and upon polymerization, benzothiazol, benzophenone, or water is added.

In the present invention, the catalyst comprises (a) a Group 9, Group 10 or Group 11 transition metal complex (IUPAC, Inorganic chemical nomenclature recommendations, revised in 1989), and (b) a ligand containing a Group 15 element.

Examples of the Group 9 transition metal complex among (a) the Group 9, Group 10 or Group 11 transition metal complexes include a cobalt or ruthenium complex, carboxylate, phosphonate, carbamate, and sulfonate. Specific examples thereof include cobalt acetate, cobalt acetylacetate, ruthenium acetate, ruthenium trifluoroacetate, ruthenium acetylacetate, and ruthenium trifluoromethane sulfonate.

Examples of the Group 10 transition metal complex include a nickel or palladium complex, carboxylate, phosphonate, carbamate, and sulfonate. Specific examples thereof include nickel acetate, acetylacetate nickel, palladium acetate, palladium trifluoroacetate, palladium acetylacetate, palladium chloride, bis(N,N-diethylcarbamate)bis(diethylamine)palladium, and palladium sulfate.

Examples of the Group 11 transition metal complex include a copper or silver complex, carboxylate, phosphonate, carbamate, and sulfonate. Specific examples thereof include copper acetate, copper trifluoroacetate, copper acetylacetate, silver acetate, silver trifluoroacetate, silver acetylacetate, and silver trifluoromethane sulfonate.

Among them, the inexpensive and economically preferable transition metal complex (a) is a nickel and copper compound, and the transition metal complex (a) which is preferable from the viewpoint of the yield and the molecular weight of polyketone is a palladium compound. From the viewpoint of improvement on the catalytic activity and the intrinsic viscosity, palladium acetate is most preferably used.

As the (b) ligand containing a Group 15 element in the catalyst in the present invention, 1,3-bis[bis(2-methoxy-5-methylphenyl)phosphino]propane(BIBMAPP) represented by the formula 1, is used. By using such the catalyst, polyketone having high catalytic activity and intrinsic viscosity suitable for the use as a tire cord can be prepared.

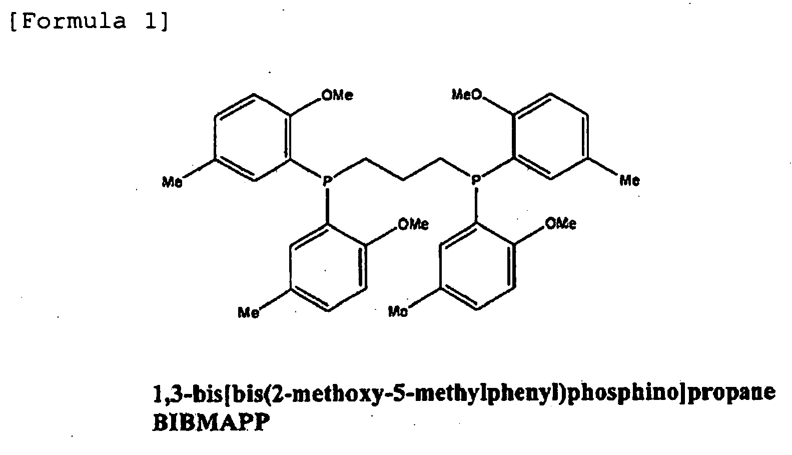

The amount of the Group 9, Group 10 or Group 11 transition metal complex (a) to be used suitably varies depending on the kind of the selected ethylenically unsaturated compound, or other polymerization conditions. Accordingly, the range of the amount cannot be limited to a specific value, but usually it is preferably in the range of 0.01 to 100 mmol, and more preferably in the range of 0.01 to 10 mmol, per 1 liter of the capacity of the reaction zone. The capacity of the reaction zone refers to a capacity of the liquid phase in the reactor.

Also, the amount of the ligand (b) is not particularly limited, but usually it is preferably in the range of 0.1 to 3 mol, and more preferably in the range of 1 to 3 mol per 1 mol of the transition metal complex (a).

Examples of the anion (c) of an acid with pKa of 4 or lower include an anion of an organic acid with pKa of 4 or lower such as trifluoroacetic acid, trifluoromethane sulfonic acid, and p-toluene sulfonic acid; an anion of an inorganic acid with pKa of 4 or lower such as perchloric acid, sulfuric acid, nitric acid, phosphoric acid, heteropoly acid, tetrafluoroboric acid, hexafluorophosphoric acid, and fluorosilic acid; and an anion of a boron compound such as trispentafluorophenylborane, trisphenylcarbenium tetrakis(pentafluorophenyl)borate, and N,N-dimethylaluminum tetrakis(pentafluorophenyl)borate.

The present invention is characterized in that acids having pKa of 4 or lower, as the catalyst used for the preparation of polyketone, are used singly or in a mixture of at least two kinds thereof. It is preferable to use a mixture of trifluoroacetic acid, sulfuric acid or trifluoroacetic acid, and sulfuric acid from the viewpoint of improvement on the intrinsic viscosity.

In the present invention, the molar ratio of the (a) component : the (b) component : the (c) component is 1 : 1.2 : 7. Generally, in the related art, the molar ratio of the (a) component : the (b) component : the (c) component is 1 : 1.2 : 20, thus it having larger amount of the acids. However, it was found that in the present invention using at least one kind of acid having pKa of 4 or lower as the (c) component, the molar ratio of the components of about 1 : 1.2 : 7 allows preparation of polyketone having most satisfactory catalytic activity, yield, and intrinsic viscosity.

In the present invention, examples of the ethylenically unsaturated compound to be copolymerized with carbon monoxide include an α-olefin such as ethylene, propylene, 1-butene, 1-hexene, 4-methyl-1-pentene, 1-octene, 1-decene, 1-dodecene, 1-tetracene, 1-hexadecene, and vinylcyclohexane; an alkenyl aromatic compound such as styrene, and a-methylstyrene; a cyclic olefin such as cyclopentene, norbornene, 5-methylnorbornene, 5-phenylnorbornene, tetracyclododecene, tricyclododecene, tricycloundecene, pentacyclopentadecene, pentacyclohexadecene, and 8-ethyltetracyclododecene; vinyl halide such as vinyl chloride; acrylic acid ester such as ethylacrylate, and methylacrylate. These ethylenically unsaturated compounds can be used singly or in a mixture. Among these, as the ethylenically unsaturated compound, an α-olefin is preferable, and an olefin having 2 to 4 carbon atoms is more preferable, and ethylene is most preferable.

In the present invention, the input molar ratio of carbon monoxide and the ethylenically unsaturated compound is preferably 1 : 1.8 or 1 : 2.0. In the preparation of polyketone, it is general that the input ratio of carbon monoxide and the ethylenically unsaturated compound is 1 : 1. However, it was found that in the present invention using palladium acetate and 1,3-bis[bis(2-methoxy-5-methylphenyl)phosphino]propane, adjustment of the ratio of carbon monoxide and the ethylenically unsaturated compound to 1 : 1.8 or 1: 2.0 improves the catalytic activity and the intrinsic viscosity.

The present invention is further characterized in that upon preparation of polyketone by polymerization, benzothiazole or benzophenone is added. In the present invention, upon preparation of polyketone by polymerization, if benzothiazole or benzophenone is added, the effect of improving the intrinsic viscosity of polyketone can be accomplished. Further, if benzothiazole or benzophenone is not added, the intrinsic viscosity is decreased, but the catalytic activity is remarkably increased. Accordingly, the present invention selectively uses benzothiazole or benzophenone, to adjust the intrinsic viscosity and the catalytic activity upon the preparation of a polyketone fiber.

In the present invention, if benzothiazole or benzophenone is used, the molar ratio of the (a) Group 9, Group 10 or Group 11 transition metal complex and the benzothiazole or benzophenone is 1 : 5 to 100, and preferably 1 : 40 to 60. If the molar ratio of the transition metal and benzothiazole or benzophenone exceeds 1 : 100, the prepared polyketone tends to have decreased catalytic activity, which is undesirable.

The present invention uses a mixed solvent comprising methanol and water, as a liquid medium.

In the present invention, in order to improve the intrinsic viscosity, an acid having pKa or 4 or lower can be used and upon polymerization, benzothiazole or benzophenone is selectively added. Moreover, as compared with the related art in which the polymerization time was at least 10 hours to improve the intrinsic viscosity, in the present invention, it was noted that even short polymerization time of around 2 hours allows the preparation of polyketone having high intrinsic viscosity.

In the present invention, copolymerization of carbon monoxide and the ethylenically unsaturated compound occurs in the presence of an organometallic complex comprising (a) a Group 9, Group 10 or Group 11 transition metal complex, (b) a ligand containing a Group 15 element, and (c) an anion of an acid with pKa of 4 or lower, and the catalyst is produced by bring the above-described three components into contact. For contacting, any well-known method can be used. For example, it is preferable that three components are preliminarily mixed in a suitable solvent into a solution and then used; or three components are separately supplied to a polymerization system, wherein they are then brought into contact.

When the present invention is carried out, as the polymerization method, a solution polymerization method using a liquid medium, a suspension polymerization method, a gas phase polymerization method comprising impregnating a small amount of a catalyst solution having a high concentration, or the like can be used. Polymerization is preferably carried out in either a batch mode or a continuous mode. As the reactor used for polymerization, a well-known reactor may be used as it is, or as modified, if desired. The polymerization temperature is not particularly limited, but it is generally in the range of 40 to 180°C, and preferably in the range of 50 to 120°C. The pressure upon polymerization is not limited, but it is generally in the range of normal pressure to 20 MPa, and preferably in the range of 4 to 15 MPa.

Hereinafter, the constitution and the effects of the present invention will be described in detail with reference to Examples and Comparative Examples. These Examples are provided only for the illustrative purpose, and it should not be construed that the scope of the invention is limited thereto. In Examples and Comparative Examples, the intrinsic viscosity and the catalytic activity are evaluated in the following methods.

### (1) Intrinsic viscosity

The polymerized resin is dissolved in a thermostat at 60°C at a concentration of 0.01 g/100 ml to 1 g/100 ml (m-cresol) for 1 to 5 hours, and then the viscosity is measured using an Ubelode viscometer at 30°C. The viscosities vs. the concentrations are plotted and extrapolated to determine an intrinsic viscosity.

### (2) Catalytic activity

The catalytic activity is determined in the weight of the polymerized resin/the weight of palladium·time (kg/g-Pd·hr).

### EXAMPLES

### (Example 1)

0.0140 g of palladium acetate, 0.0398 g of 1,3-bis[bis(2-methoxy-5-methylphenyl)phosphino]propane (BIBMAPP), 0.0499 g of trifluoroacetic acid and 0.4225 g of benzothiazole were dissolved in 100 ml of acetone. The solution was dissolved in the mixture of 2497.5 ml of methanol and 1000 ppm of water. After removing the air from the solution under vacuum, the obtained solution was charged into a stainless-steel autoclave which had been purged with nitrogen. After sealing the autoclave, the contents were heated under stirring at a speed of 800 rpm. When the internal temperature reached 70°C, a mixed gas of carbon monoxide and ethylene (the molar ratio of 1:1.8) was added until the internal pressure of the autoclave became 100 bar. The contents were stirred for 2 hours while the internal temperature and the internal pressure were maintained at 70°C and 100 bar, respectively. After cooling, the contents were taken out from the autoclave which had been degassed. The solution was filtered and then washed with methanol several times. The solution was dried under reduced pressure at room temperature to 80°C, to obtain 51.2 g of a polymer.
The results of ¹³C-NMR and IR confirmed that the polymer was polyketone which substantially consists of repeating units each derived from carbon monoxide and ethylene. The catalytic activity was equal to 3.8 kg/g-Pd·hr, and the intrinsic viscosity was 16.8 dl/g.
The results are summarized in Table 1.

### (Example 2)

0.0140 g of palladium acetate, 0.0398 g of 1,3-bis[bis(2-methoxy-5-methylphenyl)phosphino]propane, 0.0499 g of trifluoroacetic acid and 0.4225 g of benzothiazole were dissolved in 100 ml of acetone. The solution was dissolved in the mixture of 2497.5 ml of methanol and 1000 ppm of water. After removing the air from the solution under vacuum, the obtained solution was charged into a stainless-steel autoclave which had been purged with nitrogen. After sealing the autoclave, the contents were heated under stirring at a speed of 800 rpm. When the internal temperature reached 80°C, a mixed gas of carbon monoxide and ethylene (the molar ratio of 1:2) was added until the internal pressure of the autoclave became 70 bar. The contents were stirred for 2 hours while the internal temperature and the internal pressure were maintained at 80°C and 70 bar, respectively. After cooling, the contents were taken out from the autoclave which had been degassed. The solution was filtered and then washed with methanol several times. The solution was dried under reduced pressure at room temperature to 80°C, to obtain 72.8 g of a polymer.

The results of ¹³C-NMR and IR confirmed that the polymer was polyketone which substantially consists of repeating units each derived from carbon monoxide and ethylene. The catalytic activity was equal to 5.4 kg/g-Pd·hr, and the intrinsic viscosity was 15.7 dl/g.

The results are summarized in Table 1.

### (Example 3)

0.0140 g of palladium acetate, 0.0398 g of 1,3-bis[bis(2-methoxy-5-methylphenyl)phosphino]propane, 0.0249 g of trifluoroacetic acid, 0.0215g of sulfuric acid and 0.4225 g of benzothiazole were dissolved in 100 ml of acetone. The solution was dissolved in the mixture of 2497.5 ml of methanol and 1000 ppm of water. After removing the air from the solution under vacuum, the obtained solution was charged into a stainless-steel autoclave which had been purged with nitrogen. After sealing the autoclave, the contents were heated under stirring at a speed of 800 rpm. When the internal temperature reached 70°C, a mixed gas of carbon monoxide and ethylene (the molar ratio of 1:1.8) was added until the internal pressure of the autoclave became 70 bar. The contents were stirred for 2 hours while the internal temperature and the internal pressure were maintained at 70°C and 70 bar, respectively. After cooling, the contents were taken out from the autoclave which had been degassed. The solution was filtered and then washed with methanol several times. The solution was dried under reduced pressure at room temperature to 80°C, to obtain 90.3 g of a polymer.

The results of ¹³C-NMR and IR confirmed that the polymer was polyketone which substantially consists of repeating units each derived from carbon monoxide and ethylene. The catalytic activity was equal to 6.7 kg/g-Pd·hr, and the intrinsic viscosity was 13.5 dl/g.

The results are summarized in Table 1.

### (Example 4)

0.0140 g of palladium acetate, 0.0398 g of 1,3-bis[bis(2-methoxy-5-methylphenyl)phosphino]propane and 0.1226 g of sulfuric acid were dissolved in 100 ml of acetone. The solution was dissolved in the mixture of 2475 ml of methanol and 25 ml of water. After removing the air from the solution under vacuum, the obtained solution was charged into a stainless-steel autoclave which had been purged with nitrogen. After sealing the autoclave, the contents were heated under stirring at a speed of 800 rpm. When the internal temperature reached 70°C, a mixed gas of carbon monoxide and ethylene (the molar ratio of 1:1.8) was added until the internal pressure of the autoclave became 85 bar. The contents were stirred for 2 hours while the internal temperature and the internal pressure were maintained at 70°C and 85 bar, respectively. After cooling, the contents were taken out from the autoclave which had been degassed. The solution was filtered and then washed with methanol several times. The solution was dried under reduced pressure at room temperature to 80°C, to obtain 440.8 g of a polymer.

The results of ¹³C-NMR and IR confirmed that the polymer was polyketone which substantially consists of repeating units each derived from carbon monoxide and ethylene. The catalytic activity was equal to 32.7 kg/g-Pd·hr, and the intrinsic viscosity was 4.5 dl/g.

The results are summarized in Table 1.

### (Example 5)

0.0140 g of palladium acetate, 0.0398 g of 1,3-bis[bis(2-methoxy-5-methylphenyl)phosphino]propane and 0.0429 g of sulfuric acid were dissolved in 100 ml of acetone. The solution was dissolved in the mixture of 2200 ml of methanol and 300 ml of water. After removing the air from the solution under vacuum, the obtained solution was charged into a stainless-steel autoclave which had been purged with nitrogen. After sealing the autoclave, the contents were heated under stirring at a speed of 800 rpm. When the internal temperature reached 70°C, a mixed gas of carbon monoxide and ethylene (the molar ratio of 1:1) was added until the internal pressure of the autoclave became 90 bar. The contents were stirred for 2 hours while the internal temperature and the internal pressure were maintained at 70°C and 90 bar, respectively. After cooling, the contents were taken out from the autoclave which had been degassed. The solution was filtered and then washed with methanol several times. The solution was dried under reduced pressure at room temperature to 80°C, to obtain 489.3 g of a polymer.

The results of ¹³C-NMR and IR confirmed that the polymer was polyketone which substantially consists of repeating units each derived from carbon monoxide and ethylene. The catalytic activity was equal to 36.3 kg/g-Pd·hr, and the intrinsic viscosity was 4.3 dl/g.

The results are summarized in Table 1.

### (Example 6)

0.0140 g of palladium acetate, 0.0398 g of 1,3-bis[bis(2-methoxy-5-methylphenyl)phosphino]propane, and 0.0499 g of trifluoroacetic acid were dissolved in 100 ml of acetone. The solution was dissolved in the mixture of 2497.5 ml of methanol and 2.5 ml of water. After removing the air from the solution under vacuum, the obtained solution was charged into a stainless-steel autoclave which had been purged with nitrogen. After sealing the autoclave, the contents were heated under stirring at a speed of 800 rpm. When the internal temperature reached 80°C, a mixed gas of carbon monoxide and ethylene (the molar ratio of 1:2) was added until the internal pressure of the autoclave became 70 bar. The contents were stirred for 3 hours while the internal temperature and the internal pressure were maintained at 80°C and 70 bar, respectively. After cooling, the contents were taken out from the autoclave which had been degassed. The solution was filtered and then washed with methanol several times. The solution was dried under reduced pressure at room temperature to 80°C, to obtain 368.1 g of a polymer.

The results of ¹³C-NMR and IR confirmed that the polymer was polyketone which substantially consists of repeating units each derived from carbon monoxide and ethylene. The catalytic activity was equal to 27.3 kg/g-Pd·hr, and the intrinsic viscosity was 5.7 dl/g.

The results are summarized in Table 1

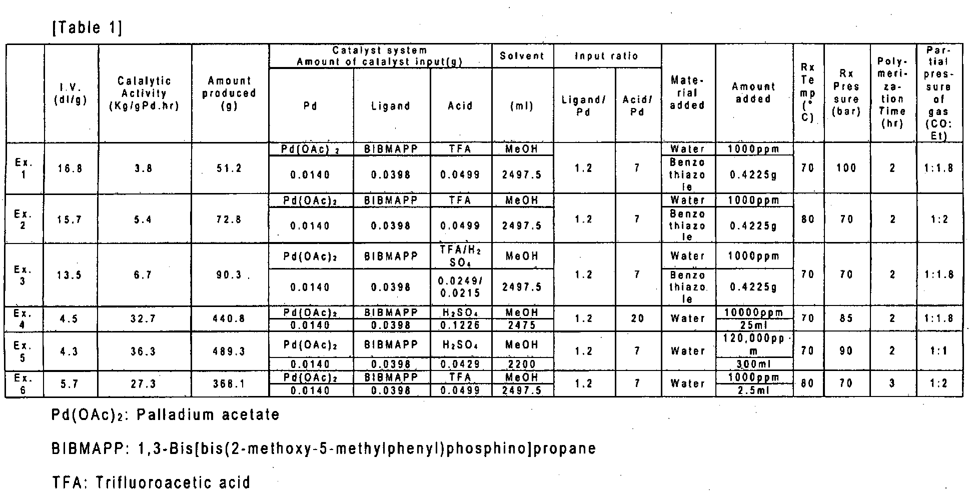

### (Comparative Example 1)

0.0140 g of palladium acetate, 0.0399 g of 1,3-bis[di(2-methoxyphenyl)phosphino]propane, 0.0499 g of trifluoroacetic acid and 0.4225 g of benzothiazole were dissolved in 100 ml of acetone. The solution was dissolved in the mixture of 2497.5 ml of methanol and 1000 ppm of water. After removing the air from the solution under vacuum, the obtained solution was charged into a stainless-steel autoclave which had been purged with nitrogen. After sealing the autoclave, the contents were heated under stirring at a speed of 800 rpm. When the internal temperature reached 70°C, a mixed gas of carbon monoxide and ethylene (the molar ratio of 1:1.8) was added until the internal pressure of the autoclave became 100 bar. The contents were stirred for 2 hours while the internal temperature and the internal pressure were maintained at 70°C and 100 bar, respectively. After cooling, the contents were taken out from the autoclave which had been degassed. The solution was filtered and then washed with methanol several times. The solution was dried under reduced pressure at room temperature to 80°C, to obtain 51.0 g of a polymer.

The results of ¹³C-NMR and IR confirmed that the polymer was polyketone which substantially consists of repeating units each derived from carbon monoxide and ethylene. The catalytic activity was equal to 3.9 kg/g-Pd·hr, and the intrinsic viscosity was 9.7 dl/g.

The results are summarized in Table 2.

### (Comparative Example 2)

0.0140 g of palladium acetate, 0.0399 g of 1,3-bis[di(2-methoxyphenyl)phosphino]propane, 0.0499 g of trifluoroacetic acid and 0.4225 g of benzothiazole were dissolved in 100 ml of acetone. The solution was dissolved in the mixture of 2497.5 ml of methanol and 1000 ppm of water. After removing the air from the solution under vacuum, the obtained solution was charged into a stainless-steel autoclave which had been purged with nitrogen. After sealing the autoclave, the contents were heated under stirring at a speed of 800 rpm. When the internal temperature reached 80°C, a mixed gas of carbon monoxide and ethylene (the molar ratio of 1:2) was added until the internal pressure of the autoclave became 70 bar. The contents were stirred for 2 hours while the internal temperature and the internal pressure were maintained at 70°C and 70 bar, respectively. After cooling, the contents were taken out from the autoclave which had been degassed. The solution was filtered and then washed with methanol several times. The solution was dried under reduced pressure at room temperature to 80°C, to obtain 69.5 g of a polymer.

The results of ¹³C-NMR and IR confirmed that the polymer was polyketone which substantially consists of repeating units each derived from carbon monoxide and ethylene. The catalytic activity was equal to 5.2 kg/g-Pd·hr, and the intrinsic viscosity was 8.9 dl/g.

The results are summarized in Table 2.

### (Comparative Example 3)

0.0140 g of palladium acetate, 0.0399 g of 1,3-bis[di(2-methoxyphenyl)phosphino]propane, 0.0249 g of trifluoroacetic acid, 0.0215g of sulfuric acid and 0.4225 g of benzothiazole were dissolved in 100 ml of acetone. The solution was dissolved in the mixture of 2497.5 ml of methanol and 1000 ppm of water. After removing the air from the solution under vacuum, the obtained solution was charged into a stainless-steel autoclave which had been purged with nitrogen. After sealing the autoclave, the contents were heated under stirring at a speed of 800 rpm. When the internal temperature reached 70°C, a mixed gas of carbon monoxide and ethylene (the molar ratio of 1:1.8) was added until the internal pressure of the autoclave became 70 bar. The contents were stirred for 2 hours while the internal temperature and the internal pressure were maintained at 70°C and 70 bar, respectively. After cooling, the contents were taken out from the autoclave which had been degassed. The solution was filtered and then washed with methanol several times. The solution was dried under reduced pressure at room temperature to 80°C, to obtain 91.7 g of a polymer.

The results of ¹³C-NMR and IR confirmed that the polymer was polyketone which substantially consists of repeating units each derived from carbon monoxide and ethylene. The catalytic activity was equal to 6.9 kg/g-Pd·hr, and the intrinsic viscosity was 7.5 dl/g.

The results are summarized in Table 2.

### (Comparative Example 4)

0.0140 g of palladium acetate, 0.0399 g of 1,3-bis[di(2-methoxyphenyl)phosphino]propane and 0.1226 g of sulfuric acid were dissolved in 100 ml of acetone. The solution was dissolved in the mixture of 2475 ml of methanol and 25 ml of water. After removing the air from the solution under vacuum, the obtained solution was charged into a stainless-steel autoclave which had been purged with nitrogen. After sealing the autoclave, the contents were heated under stirring at a speed of 800 rpm. When the internal temperature reached 70°C, a mixed gas of carbon monoxide and ethylene (the molar ratio of 1:1.8) was added until the internal pressure of the autoclave became 85 bar. The contents were stirred for 2 hours while the internal temperature and the internal pressure were maintained at 70°C and 85 bar, respectively. After cooling, the contents were taken out from the autoclave which had been degassed. The solution was filtered and then washed with methanol several times. The solution was dried under reduced pressure at room temperature to 80°C, to obtain 128.7 g of a polymer.

The results of ¹³C-NMR and IR confirmed that the polymer was polyketone which substantially consists of repeating units each derived from carbon monoxide and ethylene. The catalytic activity was equal to 9.4 kg/g-Pd·hr, and the intrinsic viscosity was 7.2 dl/g.

The results are summarized in Table 2.

### (Comparative Example 5)

0.0140 g of palladium acetate, 0.0399 g of 1,3-bis[di(2-methoxyphenyl)phosphino]propane and 0.0429 g of sulfuric acid were dissolved in 100 ml of acetone. The solution was dissolved in the mixture of 2200 ml of methanol and 300 ml of water. After removing the air from the solution under vacuum, the obtained solution was charged into a stainless-steel autoclave which had been purged with nitrogen. After sealing the autoclave, the contents were heated under stirring at a speed of 800 rpm. When the internal temperature reached 70°C, a mixed gas of carbon monoxide and ethylene (the molar ratio of 1:1) was added until the internal pressure of the autoclave became 90 bar. The contents were stirred for 2 hours while the internal temperature and the internal pressure were maintained at 70°C and 90 bar, respectively. After cooling, the contents were taken out from the autoclave which had been degassed. The solution was filtered and then washed with methanol several times. The solution was dried under reduced pressure at room temperature to 80°C, to obtain 132 g of a polymer.

The results of ¹³C-NMR and IR confirmed that the polymer was polyketone which substantially consists of repeating units each derived from carbon monoxide and ethylene. The catalytic activity was equal to 9.8 kg/g-Pd·hr, and the intrinsic viscosity was 7.0 dl/g.

The results are summarized in Table 2.

### (Comparative Example 6)

0.0140 g of palladium acetate, 0.0399 g of 1,3-bis[di(2-methoxyphenyl)phosphino]propane and 0.0499 g of trifluoroacetic acid were dissolved in 100 ml of acetone. The solution was dissolved in the mixture of 2497.5 ml of methanol and 2.5 ml of water. After removing the air from the solution under vacuum, the obtained solution was charged into a stainless-steel autoclave which had been purged with nitrogen. After sealing the autoclave, the contents were heated under stirring at a speed of 800 rpm. When the internal temperature reached 80°C, a mixed gas of carbon monoxide and ethylene (the molar ratio of 1:2) was added until the internal pressure of the autoclave became 70 bar. The contents were stirred for 3 hours while the internal temperature and the internal pressure were maintained at 80°C and 70 bar, respectively. After cooling, the contents were taken out from the autoclave which had been degassed. The solution was filtered and then washed with methanol several times. The solution was dried under reduced pressure at room temperature to 80°C, to obtain 138.9 g of a polymer.

The results of ¹³C-NMR and IR confirmed that the polymer was polyketone which substantially consists of repeating units each derived from carbon monoxide and ethylene. The catalytic activity was equal to 10.3 kg/g-Pd·hr, and the intrinsic viscosity was 5.3 dl/g.

The results are summarized in Table 2.

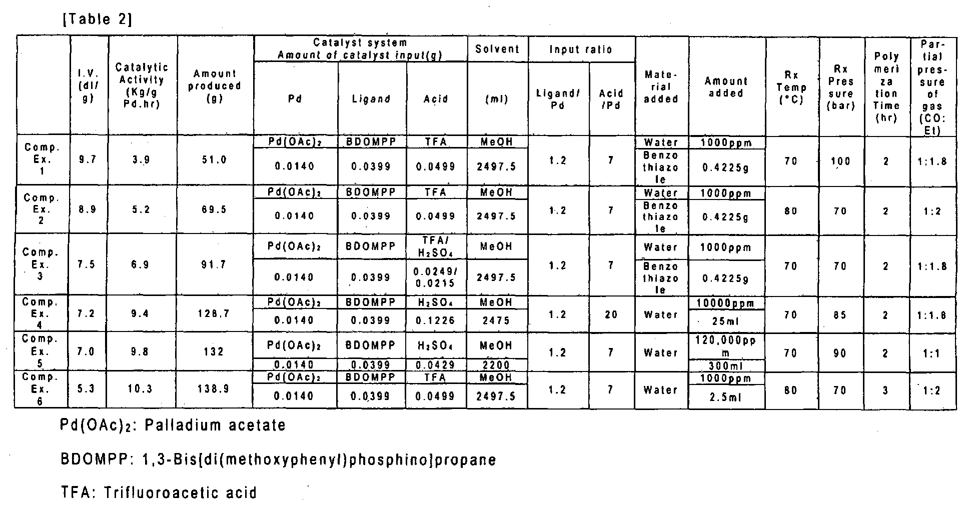

### Effects of the Invention

According to the present invention, a process for preparing polyketone is provided, wherein preferably palladium acetate and 1,3-bis[bis(2-methoxy-5-methylphenyl)phosphino]propane are used as the catalyst components, and wherein the catalytic activity and the intrinsic viscosity can be adjusted.

## Claims

1. A process for preparing polyketone, comprising copolymerization of carbon monoxide and an ethylenically unsaturated compound in a liquid medium in the presence of a catalyst,
wherein the catalyst is an organometallic complex comprising (a) a Group 9, Group 10 or Group 11 transition metal complex, (b) a ligand containing a Group 15 element, and (c) an anion of an acid with pKa of 4 or lower,
the (b) component is 1,3-bis[bis(2-methoxy-5-methylphenyl)phosphino]propane,
the liquid medium is a mixed solvent of methanol and 1,000 to 10,000 ppm of water,
wherein upon polymerization, benzothiazole or benzophenone is added, and
wherein the molar ratio of the (a) component : the (b) component : the (c) component is 1 : 1.2 : 7.

2. The process for preparing polyketone according to claim 1, wherein the (a) component is palladium acetate.

3. The process for preparing polyketone according to claim 1, wherein as the (c) component, trifluoroacetic acid or sulfuric acid is used singly or in a mixture thereof.

## Patentansprüche

1. Verfahren zur Herstellung eines Polyketons, umfassend die Copolymerisation von Kohlenmonoxid und einer ethylenisch ungesättigten Verbindung in einem flüssigen Medium in Gegenwart eines Katalysators,
wobei der Katalysator ein organometallischer Komplex ist, umfassend (a) einen Komplex eines Übergangsmetalls der Gruppe 9, Gruppe 10 oder Gruppe 11, (b) einen Liganden, der ein Element der Gruppe 15 enthält, und (c) ein Anion einer Säure mit einem pKa-Wert von 4 oder niedriger,
die Komponente (b) 1,3-Bis[bis(2-methoxy-5-methylphenyl)phosphino]propan ist,
das flüssige Medium ein gemischtes Lösungsmittel aus Methanol und 1.000 bis 10.000 ppm Wasser ist,
wobei nach der Polymerisation Benzothiazol oder Benzophenon zugegeben wird, und
wobei das Molverhältnis von Komponente (a) zu Komponente (b) zu Komponente (c) 1:1,2:7 beträgt.

2. Verfahren zur Herstellung eines Polyketons nach Anspruch 1, wobei die Komponente (a) Palladiumacetat ist.

3. Verfahren zur Herstellung eines Polyketons nach Anspruch 1, wobei als Komponente (c) Trifluoressigsäure oder Schwefelsäure einzeln oder in einer Mischung davon verwendet wird.

## Revendications

1. Procédé de préparation d'une polycétone, comprenant la copolymérisation de monoxyde de carbone et d'un composé à insaturation éthylénique dans un milieu liquide en présence d'un catalyseur,
dans lequel le catalyseur est un complexe organométallique comprenant (a) un complexe d'un métal de transition du groupe 9, du groupe 10 ou du groupe 11, (b) un ligand contenant un élément du groupe 15, et (c) un anion d'un acide ayant un pKa inférieur ou égal à 4,
le composant (b) est le 1,3-bis[bis(2-méthoxy-5-méthyl-phényl)phosphino]propane,
le milieu liquide est un mélange de solvants constitué de méthanol et de 1000 à 10 000 ppm d'eau,
dans lequel lors de la polymérisation, du benzothiazole ou de la benzophénone est ajouté(e), et
dans lequel le rapport molaire du composant (a):composant (b):composant (c) est de 1:1,2:7.

2. Procédé de préparation d'une polycétone selon la revendication 1, dans lequel le composant (a) est un acétate de palladium.

3. Procédé de préparation d'une polycétone selon la revendication 1, dans lequel, comme composant (c), on utilise de l'acide trifluoroacétique ou de l'acide sulfurique seul ou un mélange de ceux-ci.
